(19) Europäisches Patentamt
European Patent Office
Office européen des brevets

(11) **EP 1 374 689 B1**

(12) **EUROPEAN PATENT SPECIFICATION**

(45) Date of publication and mention
of the grant of the patent:
**12.11.2008 Bulletin 2008/46**

(51) Int Cl.:
***A23B 7/04*** *(2006.01)*    ***A23B 7/153*** *(2006.01)*

(21) Application number: **02714228.0**

(22) Date of filing: **20.03.2002**

(86) International application number:
**PCT/ES2002/000132**

(87) International publication number:
**WO 2002/076221 (03.10.2002 Gazette 2002/40)**

(54) **FROZEN POTATO PRODUCT AND PRODUCTION METHOD THEREFOR**

GEFRORENES KARTOFFELPRODUKT UND HERSTELLUNGSVERFAHREN DAFÜR

PRODUIT DE POMME DE TERRE CONGELEE ET PROCEDE DE PRODUCTION

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **27.03.2001 ES 200100707
31.10.2001 ES 200102413**

(43) Date of publication of application:
**02.01.2004 Bulletin 2004/01**

(73) Proprietor: **Trade Deshida, S.L.
28023 Aravaca (ES)**

(72) Inventor: **ROMERO OLMED0, Matias
E-28023 Aravaca (ES)**

(74) Representative: **Illescas, Manuel et al
GONZÁLEZ-BUENO & ILLESCAS
Calle de Recoletos, 13 - 5º Izq.
28001 Madrid (ES)**

(56) References cited:
**ES-A1- 2 113 326        US-A- 4 542 030
US-A- 5 084 291        US-A- 5 206 048
US-A- 5 393 552**

**Description**

Field of the invention

The present invention relates to a novel frozen food product derived from the potato, with different cut shapes (segments, "dollar"-type slices, ovoids or "parisiennes", etc.), in different sizes, and to the process for obtaining it. The product obtained has physico-chemical and organoleptic characteristics that are different and novel in the world frozen potato market.

Prior art

A number of processes for producing potato-based frozen products used to prepare French fries are known.

The process currently most in use in the industry is probably that described in Spanish patent ES 513.114 (MCCAIN ESPANÑA S.A.), whereby peeled raw potatoes, cut into pieces and washed, are blanched in hot water in two stages, the first at 65 to 71°C for 12 to 15 minutes and the second at 79 to 90.5°C for 2 to 6 minutes, with cooling at 38°C for 10 to 20 minutes between the two stages. Next, they are dried by means of hot air and the weight is reduced by 15%, and after they have been equilibrated with ambient temperature for 3 to 10 minutes they are fried in a fat bath at a temperature of between 163°C and 190.5°C until the weight has been reduced by an additional 20 to 25%. Finally, the pieces of fried potato are frozen at -18°C.

Other known processes, such as that described in patent US 5,393,552 (NESTEC S.A.), are based on the creation of batters as starch-based protective coatings.

Other patents cite processes for obtaining unfried frozen potatoes, based on treatments involving immersion in or spraying with solutions of chemical products for gelatinizing the starch and/or inhibiting the enzymes present in the fresh potato that are responsible for blackening reactions that arise on account of the free reducing sugars, and packaging of the final product in plastic receptacles with inert or preserving atmospheres.

The method most commonly used currently for producing frozen potatoes is that which, starting with selected, peeled, washed potatoes cut to different shapes, subjects them to a blanching treatment that may last from 15 minutes to 30 minutes at temperatures in the range between 75 and 90°C. This is followed by a stage of drying with hot air at temperatures close to 80°C, which may last for several minutes. Next, there is a stage of par-frying in hydrogenated industrial fat at 180°C that may last from 1.5 minutes to 3 minutes. Lastly, the potatoes are precooled and then frozen. In the blanching stage, sodium acid pyrophosphate is added to the water in a concentration close to 0.7% in order to homogenize the color of the final product. Other auxiliary products, such as dextrose or flavors, are also added, usually by means of spraying prior to drying.

The processes mentioned include, on the one hand, operations that involve relatively high costs that make the final product more expensive, such as par-frying, blanching, battering, etc. On the other hand, the final French fries have a high calorie content, which causes many consumers to reject them on account of the high level of starch they contain naturally or artificially, the fats they may incorporate artificially during the par-frying operation, and the amount of fat they retain, having been fried, during their consumption. The industrial fats usually used in the par-frying industry are "shortenings" (mixtures of partially hydrogenated vegetable oils) with fairly high saturation indices, with the result that their quality in health terms falls short, given that they have a high content of saturated fatty acids and also trans monounsaturated fatty acids resulting from hydrogenation, which are equally or more prejudicial, if that were possible, than saturated acids. All the above has repercussions for consumer health, principally causing a clear rise in blood cholesterol levels.

US 5206048 discloses a process wherein a frozen potato product is obtained by washing, peeling and slicing potatoes and dipping the sliced potatoes in a solution containing ultraphosphate.

The subject of the present invention is a frozen potato food product that solves the abovementioned problems and improves important properties in the final product. Unlike the products mentioned above, it lacks fats or starch of artificial origin as its production process requires no par-frying operation or battering with a starch-based protective coating, which simplifies the production process. Moreover, the frozen product maintains the histological structure of fresh potato substantially unaffected, and the final product has a lower calorie content than those obtained by means of other processes and, in particular, those that include par-frying operations.

The food product of the present invention is obtained by means of processes that partially and in a controlled manner remove starch from the fresh potato and strengthen its internal structure, allowing its organoleptic characteristics to resemble much more those of fried natural potato than those of the potato products widely present on the market. This is probably due to the scant alteration suffered by the histological structure of the product during the manufacturing process.

For the purposes of the present invention, it will be understood that the principal organoleptic characteristics of French fries are their color, their smoothness, their flavor and their texture, a light color, without dark patches, a smooth shape without wrinkles or bulges, a flavor as similar as possible to that of natural potato, and a crisp texture without crusting-over that is compact in its internal and external structure being desirable.

Like the frozen food products that are known in the art, the product that is the subject of the present invention has an advantage that is connected with its industrial character: it can be stored for a long period of time, which facilitates its supply to the market on an ongoing basis. In addition, as already pointed out, a product is provided that is of higher quality both because it better retains the histological structure of the starting potato and because of its low calorie content.

Detailed description of the invention

Described in detail below is a process for obtaining the food product that is the subject of the present invention.
The starting raw material is similar to that of the processes known in the art: fresh potatoes cut to the desired shape obtained by means of conventional operations of sorting, washing, peeling, and second washing.
Use may be made of any potato variety suitable for frying (Bintje, Frisia, Agria, Jaerla, Kennebec, Sandra, Liseta, etc.), with a starch content in the range between 15 and 22% and a water content in the range between 71 and 84%. The preferred cut shape is parallelepipedal, but it should be pointed out that in the present invention the shape plays no relevant role and therefore the product that is the subject thereof may have any shape (segments, slices, dollar-type slices, ovoid, "parisiennes", etc.). Preferably, the following cuts are used (length $\times$ width): 3 mm $\times$ 3 mm, 7 mm $\times$ 7 mm, 9 mm $\times$ 9 mm, 30 mm $\times$ 15 mm, 5 mm $\times$ 60 mm, 12 mm $\times$ 20 mm, with a height preferably of between 5 mm and 12 mm.
The process of the invention is as defined in Claims 1 to 6.

Not part of the invention:

The process comprises the following stages:
(a) immersing the fresh potatoes in an aqueous solution of a food-grade salt, preferably sodium chloride, said saline solution being stirred constantly at a temperature $T_1$ of between 5 and 35°C, with solute concentrations of between 0.1% and 5% (W/V) for a time $t_1$ of between 4 and 16 minutes.
Although the washing of the cut potatoes with additive-free water removes a certain proportion of the starch retained on the outer surface of the potatoes, it was observed that the treatment mentioned generates a greater flow of starch from the inside of the cells in the outermost layers of the potato toward the liquid medium. This will result later in a lower level of fat retention in the final frying operation.
Immersion of the potatoes in a saline solution in the manner indicated allows controlled removal of from 1 to 2% of the starch. The following table gives results for the operation in tests done using sodium chloride under different conditions of time, temperature, and salt concentration.

Table I

| Results of starch removed % (w/initial weight of potato) | | | | | | | | |
|---|---|---|---|---|---|---|---|---|
| Conditions | T = 12.5°C | | T = 17.5°C | | T = 22.5°C | | T = 32.5°C | |
| | 8 min | 15 min | 8 min | 15 min | 8 min | 15 min | 8 min | 15 min |
| 0.2% (W/V) | 1.14 | 1.26 | 1.37 | 1.49 | 1.38 | 1.57 | 1.30 | 1.42 |
| 0.5% (W/V) | 1.45 | 1.75 | 1.87 | 1.98 | 1.87 | 2.01 | 1.69 | 1.90 |
| 1.0% (W/V) | 1.48 | 1.77 | 1.75 | 1.99 | 1.79 | 2.08 | 1.75 | 1.86 |

Taking into account the influence of the reduction in starch in this treatment on the lower retention of fat in the final frying operation, it was found that the result is optimized at a temperature close to 15 to 20°C and a sodium-chloride concentration in the medium close to 0.5% (W/V), a starch reduction of between 1 and 2% being generated.
(b) Immersing the potatoes from stage (a) in a water bath at a temperature $T_2$ of between 45 and 65°C, with addition of a food preservative and antioxidant element that does not confer a disagreeable taste, at a concentration of between 0.1 and 2% (W/V) for a time $t_2$ of between 5 and 15 minutes.
It was observed that the gelatinization of a significant proportion of the starch remaining in the potato in the presence of a preservative agent, which takes place in this stage, contributes to greater stability of the structure of the potato during storage in frozen form. Likewise, it was observed that, by using, as additive, citric acid monohydrate as preservative agent, which gelatinizes the starch in the potato, optimum results are achieved at a concentration of 0.4%, $T_2$ = 50°C

and $t_2$ = 10 minutes.

(c) Drying at the same time as cooling the potatoes from stage (b) by means of a laminar airflow at a temperature $T_3$ of between 15 and 45°C for a time $t_3$ of between 1 and 5 minutes, with an air speed $V_1$ of between 0.2 m/s and 2 m/s and relative humidity (RH) of between 15% and 40%.

A preferred combination of the parameters of this process is $T_3$ = 25°C, $t_3$ = 2 minutes, $V_1$ = 0.5 m/s, and $RH_1$ = 30%. After this stage, the potato is prepared for freezing and storage for long periods (longer than 6 months) in optimum form.

(d) Freezing the potato from stage (c) at -18°C by means of the customary processes for industrial freezing of vegetable products, preferably by means of immersion of the potatoes in a liquid-nitrogen/air blend atmosphere, in order to maximize preservation of the organoleptic characteristics of the product.

(e) Optionally, after stage (b), the potatoes are treated by means of a turbulent convection of hot air at speed $V_2$ of between 0.1 and 1 m/s at a temperature $T_4$ of between 75° and 150°C for a time $t_4$ of between 30 and 90 minutes, for the purpose of simultaneously reducing starch and/or water in order to reduce yet further the calorie content of the product and/or to extend the life of the frozen product. The duration of this stage is related increasingly to the percentage of starch it is desired to remove and inversely related to the temperature and speed of the air. During the first 6 to 12 minutes, it is necessary for the relative humidity of the air to be high and preferably at a level close to 100%, preferable for it to be at water saturation level. Insufficient humidity in this stage may give rise to significant defects in the organoleptic characteristics of the product.

The following table gives the results for starch removal in this stage (e) in two different cases: potatoes previously processed according to the process described in stages (a) and (b) with NaCl and citric acid monohydrate as additives, respectively, and potatoes cut to an identical geometrical shape but not subjected to stages (a) and (b).

Table II

|  | Starch content % (W/W) of the potatoes at different points in the process of stage (3) | | |
| --- | --- | --- | --- |
|  | t = 0 min. | t = 10 min. | t = 30 min. |
| Potatoes <u>not treated</u> previously with the processes of stages (a) and (b) | 18% | - | 16.5% |
| Potatoes <u>treated</u> previously with the processes of stages (a) and (b) | 16% | 14% | 11% |

It was also observed (data not shown) that the presence of citric acid monohydrate in the solution of stage (b) quantitatively improves the yield of this optional stage (e).

The food product that is the subject of the present invention has a number of properties that distinguish it from products known in the art: it maintains the internal histological structure of the fresh potato substantially unaffected, since the treatments necessary for producing it affect, in this connection, only the outermost surface layers of cells, the cells in the innermost zones being preserved practically intact; unnatural starches or fats are not incorporated into the product; it has a lower calorie content for the product both owing to the lower starch content and to the lower retention of fat when they are fried for consumption; the loss of raw material during the process, of between 2 and 15%, is less than, in particular, that which occurs in products requiring a par-frying operation.

These properties offer significant advantages. Maintaining the organoleptic properties of raw potato practically unaffected upon frying and, in turn, reducing its contribution in calories to the diet confers a high level of quality on the final product compared to frozen products that exist currently on the market. Moreover, operations that are customary in the industry for processing this type of product are significantly improved, with expensive and complex stages of the process, such as blanching and par-frying, being eliminated, the processing time during which the product is obtained being greatly shortened and the manufacturing costs, essentially in regard to energy supplies, raw materials, and machinery, being significantly reduced. All this results in greater productivity for the manufacturing process, in the elimination of operations that are dangerous for people (par-frying), and in a clear-cut improvement in the compatibility of the industrial process with environmental conservation (elimination of blanching).

In addition, the ability to control the reduction in the starch content makes it possible to offer to the market frozen potatoes with a uniform starch content, irrespective of the starting potato variety, with the advantages this affords from the standpoint of product dietary quality.

A variant embodiment of the process described above is also the subject of the present invention. It consists in combining stages a) and b) into a new stage a'), to which stages b') and b") are added, the final stages c') and d') being equivalent to stages c) and d) in the previous process. The preferred variant embodiment of the process would be the following:

a') immersion of the fresh potatoes in a saline solution containing, in addition, a preservative and antioxidant food additive that does not adversely affect the organoleptic properties of the potato;
b') next, immersion in an aqueous solution with a color-homogenizing, basifying and potato-structure-stabilizing food additive that does not adversely affect the potato's organoleptic properties;
b") next, immersion in an aqueous cooling solution, with optional addition of color- or flavor-enhancing food additives;
c') drying;
d') freezing.

The product obtained by means of this variant embodiment of the process is a potato:

* frozen and not par-fried, that may be prepared in all cut formats in which marketed frozen potatoes are currently offered: strips or rods with sections of from 3 mm × 3 mm, 7 mm × 7 mm, 9 mm × 9 mm, up to 30 mm × 15 mm or larger, segments, "dollar"-type slices, ovoids or "parisiennes", etc.;
* that may be stored for long periods of time without the defects that normally adversely affect the quality of frozen potatoes being produced, such as internal and external blackening owing to the activity of specific enzymes, principally those in the phenolase group, that are present in the cell membranes of the potato and catalyze molecular oxidation reactions, such as tyrosine, that generate the "brown polymers" characteristic of such coloring. "Long periods of time" should be understood to mean periods longer than 12 months;
* that is characterized by a homogeneous and compact texture throughout the cross section of the product, including the external layers, owing to the fact that, in this case, complete gelatinization of the starch is achieved without causing significant damage to the histological structure, unlike current frozen par-fried potatoes in which a purulent, barely compact internal pulp and a crusty outer layer resulting from the adverse effect on the histological structure caused by frying and the incorporation into the product of hydrogenated fats and other auxiliary elements in this manufacturing process are observed;
* a further, very significant characteristic of the product, which significantly differentiates it from any other frozen potato product currently marketed, is that, once fried for consumption, an operation requiring time similar to that of current French fries, it presents properties of a crispy outer texture and compact inner pulp that are greatly superior in terms of quality and that make it possible for it to be able to be consumed in good sensory conditions for a period longer than that which is achieved with current products.

"Sensory conditions" are understood to mean, among other things:

- the crisp outer;
- the holding time. This parameter measures the time during which the potato, once fried, maintains its organoleptic conditions. In the case of the potatoes of the invention, this time is estimated at between 15 and 20 minutes as opposed to the 5 to 10 minutes of the par-fried potatoes described in the Prior Art;
- homogeneity of color over the entire outer surface of the product;
- and the absence of anomalous flavors not belonging to the potato, owing to the presence of industrial-use hydrogenated fats and other products customarily used in the manufacture of French fries.

* Physically and chemically, the product is **characterized in that** it retains a composition similar to that of natural potato, with a water and dry material content that in terms of percentage is preserved once the process is concluded. Thus, depending on the initial composition of the raw material, we obtain a dry material yield between 18% and 24% for water percentages of 82% to 76%, respectively. This figure represents a maximum raw material loss through the production process of 30% as compared to the 50% loss in the par-fried potatoes described in the Prior Art. The product also contains residues of the food additives used during the various stages of the treatment, although all of these are in quantities far below those permitted by international food-related legislation.

For producing the frozen potato of the invention, any variety of potato customarily used for frying is used, the most important being the Russet Burbank, Agria, Bintje, Hermes, Asterix, Sandra, etc. varieties. Acceptable margins of dry material in the potato vary between 18% and 24%, although there is an optimum for each cut format. In general, just as for other types of French fries, such as par-fried French fries, potatoes that are as cylindrical as possible, with a length of more than 50 mm, with few eyes and without protuberances that may disrupt the cleaning, washing, and cutting stages are sought.

This is, therefore, a novel, frozen-potato product whose essential technical characteristics stem from the production process used during its manufacture.

For the production of potatoes of this invention, the starting point is washed, peeled and cut potatoes that have been partially destarched (to eliminate the problems that starch in the solution treatment receptacles may generate), with cut formats that may vary from 3 mm × 3 mm, 7 mm × 7 mm, 9 mm × 9 mm, up to 30 mm × 15 mm or larger, segments, "dollar"-type slices, ovoids or "parisiennes", etc., which undergo three treatments with different solutions of food additives, subsequent drying and, lastly, freezing.

The product thus obtained is packaged in bags and will be kept stored at temperatures below -18°C until it is consumed, similar to par-fried potatoes.

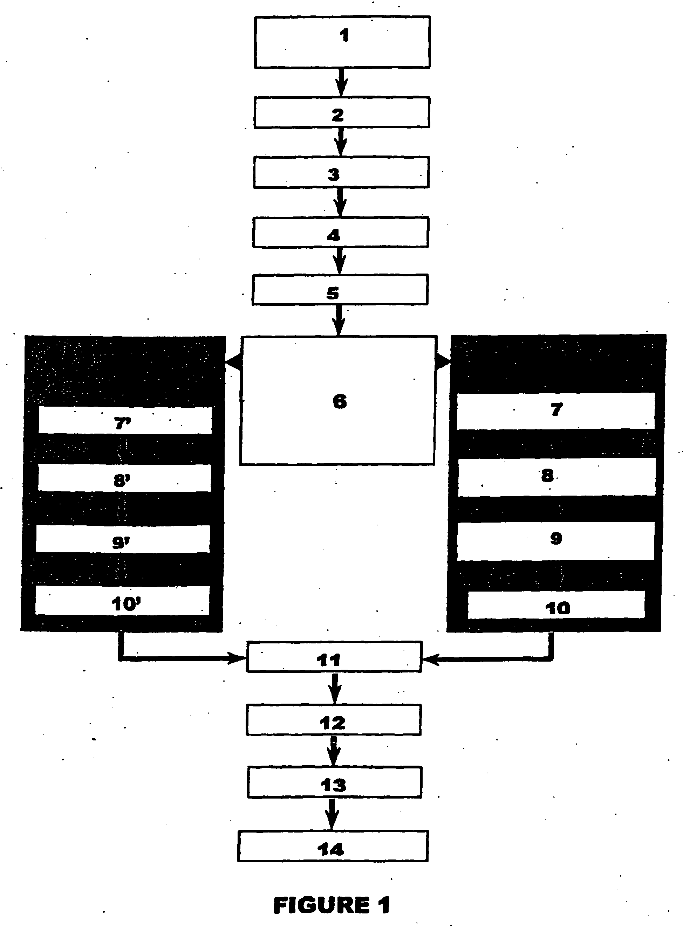

Figure 1 shows a comparative diagram of the various stages, both common and distinct, of the methods for manufacturing frozen potatoes by par-frying and by means of the specific process of this invention.

Next, a description is given of the various stages forming the production process a')-d'), together with its technical justification, on the basis of the manufacturing diagram in Fig. 1.

Preliminary stages (1-5)

The preliminary stages of preparing the potato are those of washing, peeling, selecting, cutting, partial destarching (which, according to the cutting method used, may take place at the same time as the cutting operation, as is the case of cutting using a water jet) and stage-two selecting to eliminate marks. All these stages are common and are carried out in an identical manner to those carried out in traditional industries for producing French fries. This results in potatoes or potato portions with any of the desired formats, that are free from marks and partially destarched on their surface in order to avoid later problems arising from the accumulation of starch either in the blanching vessels (traditional method) or in the treatment vessels of the specific technology of this invention.

a') Immersion in solution No. 1 (7)

The potatoes from the previous operations are completely immersed in a solution of water with citric acid monohydrate and sodium chloride, at temperatures that, depending on the cut format, vary between 55°C and 70°C for an approximate time of 5 to 15 minutes, preferably 10 minutes, and with citric acid concentrations of 0.5% to 1.5% and sodium chloride concentrations of from 0.1% to 2%, all the aforesaid depending on the characteristics of the raw material and the cut format it is desired to treat.

The object of this stage is to reduce the reducing sugars, to totally or partially inhibit enzyme activity, to partially gelatinize the starch and to rid the potato of fungal and bacterial infection.

All the aforesaid is achieved by the combined action on the product of conditions of pH, temperature and treatment time that are suited to the purpose pursued:

Function of the pH: The addition of the citric acid and the sodium chloride in suitable concentrations results in a solution pH in a range from 1.5 to 3, whereby three effects are achieved:

- a very high level of elimination of the enzymes responsible for enzymatic discoloration (phenolases) (Santerre, C.R. 1981 "A research note. Bisulfite alternatives in processing abrasion-peeled Russet Burbank potatoes");
- conversion of the reducing sugars that cause non-enzymatic discoloration into compounds that cannot be affected in terms of color; and, lastly
- speeding-up of gelatinization of the starch present in the potato.

Function of the heat: The use of a solution with a high temperature (from 50°C to 70°C, which is the case of the technology of this invention) for a specific time results in three functions being achieved:

- the process is initiated for the elimination of tyrosine (Rouselle, P., "La Pomme de Terre", 1996), which is the principal phenol substrate responsible for enzymatic discoloration;
- by means of dissolution, there is a reduction in reducing sugars (glucose and fructose) that give rise to the non-enzymatic discoloration in the final frying of the product; and, lastly
- the joint action of heat and time gives rise to gelatinization of the starch, an essential effect in achieving the optimum texture that will give rise to correct freezing and storage capability without compromising on quality.

Disinfecting function: With the combined use of the pH achieved in the specific solution of this treatment (from 1.5 to 3) and the temperature employed therein (from 55°C to 70°C), the growth or appearance of bacterial or fungal infections is prevented, complete disinfection of the potato being achieved during the process, since both actions by if alone serve to eliminate the majority of microbial strains capable of occurring in the "habitat" of the potato.

The use of citric acid in the first treatment results in a rise in the concentration of this acid in the potato and in this way enzymatic discoloration is reduced through direct competition with the chlorogenic acid present in the potato (Rouselle, P., "La Pomme de Terre", 1996), which is the second most important substrate in discoloration reactions of this type.

According to the experiments done, the presence of the sodium chloride by if only inhibits to a certain extent the action of the enzymes responsible for enzymatic discoloration.

In order to achieve the perfect performance of these important functions, the treatment has to have a homogeneous distribution of solutes and temperature, the efficiency thereof being significantly improved if a first stage is generated of energetic movement of the potato in the solution for a time of 1 to 4 minutes, with a subsequent gentle but constant movement for the remainder of the treatment time, since this promotes penetration of the solution in the potato.

b') Immersion in solution No. 2 (8)

In this second treatment, the potatoes from the previous stage are immersed in an aqueous solution with tetrasodium pyrophosphate, at a temperature that, depending on the cut format, may vary between 55°C and 70°C, for an approximate time of 20 to 40 minutes, preferably 30 minutes, and with a pyrophosphate concentration of 0.5% to 2%.

This second treatment also has a series of effects that are essential for the correct development of the process of this invention, such as the function of the pH, the function of the tetrasodium pyrophosphate, and the function of the heat:

Function of the pH: When the potatoes emerge from the treatment in solution No. 1, and owing to the latter's low pH, the potato is acidified, and therefore it is necessary to immerse it in a basic solution in order to neutralize the acid taste that may be left in it. The tetrasodium pyrophosphate solution that, depending on the concentration used, may reach a pH of 8 to 11, is perfect for this correction, leaving the potato with a neutral taste at the end of the treatment.

Function of the tetrasodium pyrophosphate: The action of tetrasodium pyrophosphate, which is well known in the food industry, particularly in its alotropic form of sodium (disodium) acid pyrophosphate, is that of stabilizer/homogenizer of the color of the product treated, with the result that uniformity of the color in the potato is further enhanced. In the case of the process of this invention, it also has very significant advantages, such as that of continuing to act in the process for inhibiting enzyme development (van Eijck, P.C., 1991, "New variety, blanching procedures and (non) enzymatic discolorations"), since specific types of enzymes are also inactivated in a strong alkaline medium, with the result that the appearance of the blackening after cooking or intense thermal treatment is limited.

Function of the heat: Continuation of the process of this second treatment at high temperatures results in a number of effects:

- the elimination of reducing sugars is further enhanced, supplementing the action of the first treatment;
- added to the action of the tetrasodium pyrophosphate, it helps to improve, if that were possible, the achievement of a homogeneous golden color in all areas of the potato;
- at the same time, tyrosine continues to be eliminated (Rouselle, P., "La Pomme de Terre", 1996), which, as mentioned earlier, is the principal substrate of enzymatic discoloration reactions;
- complementing the first stage of the process, itself continuous enhancing the gelatinization of starch as far as the innermost zones of the potato.

The combined action of the pH and the heat in the treatment with solution No. 1 and of heat in the treatment with solution No. 2 gives rise to the enlargement and rupture of the starch granules on account of their gelatinization, which leads to a swelling and rounding of the cells (Rouselle, P., "La Pomme de Terre", 1996). This rounding reduces the intercellular adherence surface, causing the formation of microchannels and interstices that allow better penetration of the treatment to the innermost zones of the potato.

Just as in the previous treatment in solution No. 1, it is essential for there to be homogeneity in terms of temperature and distribution of solute throughout this entire stage so that all the functions mentioned above can be correctly fulfilled, with the result that only very slight stirring will be needed, which does not cause erosion on the potato (this could produce a substantial loss of product).

b") Immersion in solution No. 3 (9)

In this third treatment, the potatoes are immersed in a solution of cold water with a temperature range of from 5°C to 20°C, which may have incorporated into it, optionally and always as a function of market taste, different food additives to modify the color or the flavor, such as, possibly, dextrose, sodium chloride or various types of flavor.
The principal aim of this stage of the process is to cool the potatoes from the treatment with solution No. 2 to a temperature that would allow subsequent freezing, without the need for other types of precooling, as takes place in the case of par-fried potatoes (in which several cooling stages are needed before it is possible to enter the freezing tunnel), and above all without causing losses in product weight at the end of the process as would occur in the case of air drying at low temperature.
The addition of the sodium chloride in a very low concentration results, firstly, in an adjustment of the flavor of the fried potato in accordance with market requirements and, at the same time, cell oxygen absorption is delayed, with the result that any type of enzymatic oxidation that may still occur in this stage of the process is eliminated (Rouselle, P., "La Pomme de Terre", 1996).
The duration of this stage is shorter than previous stages, being approximately 2 to 10 minutes, preferably 5 minutes, during which time, as already mentioned above, water-soluble products may be added to supplement the process, such as 0.15% dextrose to intensify the golden color of the potato after it has been fried, or 0.2% NaCl to enhance the flavor.

c') Drying (10)

The potatoes from the cold treatment in solution No. 3 are then surface-dried before being frozen. This drying is carried out with an airflow of a speed of 0.5 to 4 m/s, with 15 to 40% RH. This air may be cold or at ambient temperature, depending on the installation available. The principal function of this drying stage is that of eliminating the surface water surrounding the potato when it emerges from the last solution, but without eliminating any of the water inside the potato, which could give rise to a lower finished-product weight yield. To this end, this stage is carried out over a time that may range between 2 and 10 minutes, at temperatures, depending on the equipment used, that may vary between 3°C and 25°C.
This removal of the surface water wetting the potato is important in order to be able to better achieve subsequent freezing, since if the potato enters the freezing tunnel wet the yield of this step will drop, since it will be necessary to freeze a significant quantity of water, with a significant cost in terms of energy. At the same time, the formation of a layer of ice around the potato would affect the product's storage conditions, since large blocks of potato held together by the ice could be formed.

d') Freezing (11)

The freezing carried out in the specific production process of this invention in no way differs from methods commonly used in the vegetable-freezing industry. That is to say, freezing has to be carried out, with close-chamber system temperatures of between -10°C and -40°C over a brief time that may vary between 10 minutes and 25 minutes, depending on the equipment used and the cut format of the potatoes.
The freezing phase is essential for the correct development of the process of this invention, since it is during freezing that rupture of the starch gel structure occurs. In order to achieve the desired texture in the final fried product, a freezing/thawing process must be produced in order to rupture that part of the gel that is formed by amylopectin, which, if it remains stable, gives rise to an undesirable compact rubbery texture.
It is very important for the freezing speed to be rapid in order to prevent the formation of large ice crystals inside the potato, which would give rise to destruction of its structure and the loss of some of its organoleptic properties. The faster the freezing, the smaller the crystals formed, which will not tear the cell walls. This is of benefit not only for the better quality of the product once cooked, but also for better storage of the frozen product, since the possible losses of water through sublimation in the deep-freeze store are reduced.

Final stages (12-14)

These consist in applying conventional methods that distribute the frozen potatoes in prefixed weight measures into packaging of the type existing on the market (bags, box, etc.), labeled in accordance with the different legislation to be complied with and their storage, without breaking the cold chain.
The food product that is the subject of the present invention has a number of properties that distinguish it from products known in the art: it maintains the internal histological structure of the fresh potato substantially unaffected, since the treatments necessary for producing it are less aggressive than those normally used in the par-fried potato industry; it provides optimum organoleptic properties for subsequent frying of the frozen potato, such as a crispier texture with a much longer hold time, a more compact and homogeneous internal texture without holes, which makes it possible to keep the product hot for longer; unnatural starches or fats or any other coating substance are not incorporated into the product; it does not have incorporated into it any type of industrial fat; the loss of raw material during the process, of between 2 and 15%, is less than, in particular, that which occurs in products requiring a par-frying operation.

These properties offer significant advantages. Achievement of the organoleptic properties mentioned and, in turn, the low fat content confer a significant level of quality on the final product as compared to frozen products already existing on the market. Moreover, operations that are customary in the industry for processing this type of product are significantly improved, with expensive and complex stages of the process, such as blanching, drying, par-frying and precooling of the product when it emerges from the fryer, being eliminated, manufacturing costs, essentially in regard to energy supplies, raw materials, and machinery, being significantly reduced. All this results in greater productivity for the manufacturing process, in the elimination of operations that are dangerous to people, and in a clear-cut improvement in the compatibility of the industrial process with environmental conservation.

There now follow illustrative embodiments of the invention, the first without stage (e) and the second with it, and a third embodiment of the invention according to the preferred variant embodiment a')-d') of the process, comparing the final product obtained after it has been fried to that obtained (Example 4) from frozen potatoes marketed under the McCAIN and PESCANOVA brands, and from fresh potatoes, which illustrate the characteristics of the food product that is the subject of this invention and its industrial advantages.

EXAMPLE No. 1.

Bintje variety potatoes are selected, washed and cut until there are 1000 g of potatoes cut in the form of sticks, with a cross section of $8 \times 8$ mm.

The 1000 g of cut potatoes are immersed for 8 minutes in an aqueous solution of 0.5% NaCl (W/V) at a sustained temperature of T = 20°C. They are removed using a small basket and immersed for 8 minutes in a second aqueous solution of citric acid monohydrate in a concentration of 0.4% (W/V).

Finally, they are dried for 2 minutes by means of the application of an airflow under the following conditions: T = 30°C, RH = 35% and V = 0.5 m/s.

Finally, 966 g of potatoes are obtained and these are frozen in an air/nitrogen blend chamber until an internal temperature of -18°C is achieved. They are bagged in plastic for food use.

EXAMPLE No. 2.

Bintje variety potatoes are selected, washed and cut until there are 1000 g of potatoes cut in the form of sticks, with a cross section of $8 \times 8$ mm.

The 1000 g of cut potatoes are immersed for 8 minutes in an aqueous solution of 0.5% NaCl (W/V) at a sustained temperature of T = 20°C. They are removed using a small basket and immersed for 8 minutes in a second aqueous solution of citric acid monohydrate in a concentration of 0.4% (W/V).

They are placed in a drying oven and an airflow is applied to them under the following conditions:

For the first 10 minutes: air at humidity saturation, T = 105°C, V = 0.5 m/s.

For the next 20 minutes: RH = 10%, T = 110°C, V = 0.5 m/s.

Finally, they are treated for 2 minutes in another chamber independent of the previous one by means of an airflow under the following conditions: T = 30°C, RH = 35% and V = 0.5 m/s.

Finally, 856 g of potatoes are obtained and these are frozen in an air/nitrogen blend chamber until an internal temperature of -18°C is achieved. They are bagged in plastic for food use.

EXAMPLE No. 3.

Bintje variety potatoes are selected, washed and cut until there are 1000 g of potatoes cut in the form of sticks, with a cross section of $10 \times 10$ mm.

The 1000 g of cut potatoes are immersed for 10 minutes in an aqueous solution of 0.5% NaCl (W/V) and 1% citric acid monohydrate (W/V) at a sustained temperature of T = 65°C. They are removed by means of a small basket and immersed for 30 minutes in a second aqueous solution of tetrasodium pyrophosphate in a concentration of 1% (W/V). Next, they are immersed in a third cold-water bath at 15°C for 5 minutes and are dried for 4 minutes by means of the application of an airflow under the following conditions: T = 20°C, RH = 35% and V = 2 m/s.

Finally, 960 g of potatoes are obtained and these are frozen in an air/nitrogen blend chamber until an internal temperature of the product is achieved of -18°C, a weight of 920 g of already frozen potatoes being obtained. They are bagged in plastic for food use.

EXAMPLE No. 4 (comparative):

Test done on the products obtained in Examples 1-3, and comparison with tests done using untreated fresh potatoes and commercial potatoes under the McCain and Pescanova brands.

Process: 100 g of each type of potato are fried until their optimum sensory properties have been achieved. The following parameters are determined directly on the fried product: dry extract (DE by drying in an oven to a constant weight) and total fat (by means of washing in a Soxhlet extraction apparatus with 50/70 petroleum ether).

The difference between the dry extract of the fresh potato and that of the treated potato is used to determine the starch loss.

The following Table III gives details of the results of the tests described above.

Table III

| | Fresh potatoes | Example 1 | Example 2 | Example 3 | Example 4 | |
|---|---|---|---|---|---|---|
| | | | | | McCain | Pescanova |
| Product initial weight | 100.0 g | 100.0 g | 100.0 g | 100.0 g | 100.0 g | 100.0 g |
| 1. DE fresh potato | 23 | - | - | - | - | - |
| 2. DE frozen potato | - | 21.5 | 19 | 21.5 | 27.5 | 27 |
| 3. DE fried potato | 32 | 27.5 | 23 | 29.5 | 38 | 36 |
| 4. Final total fat | 9 | 6 | 4 | 8 | 10.5 | 9 |
| 5. Final protein | 3 | 3 | 3.5 | 3 | 4 | 4 |
| 6. Final starch (3-1) | 17 | 15.5 | 16 | 15.5 | 20 | 21 |
| Calorie contri bution (kcal/100g) * | 152 | 130 | 110 | 146 | 190 | 180 |
| *<br>**Calorie contribution = (4)×9kcal/g + (5+6)×4kcal/g** | | | | | | |

EP 1 374 689 B1

Although a series of preferred embodiments of the invention have been described and shown, it is obvious that modifications included within the scope thereof may be made to it, and the invention should not be regarded as limited to said embodiment but to the content of the claims interpreted in the light of the appended description, examples and figure.

Description of the figures

Figure 1: Process flow diagram

1: Raw material
2: Washing
3: Selection 1
4: Peeling
5: Selection 2
6: Cutting
7: Immersion in solution 1 (a')
7': Blanching
8: Immersion in solution 2 (b')
8': Drying
9: Immersion in solution 3 (b")
9': Par-frying
10: Drying (c')
10': Pre-freezing
11: Freezing (d')
12: Weighing
13: Packaging
14: Storage

Stages 7-10 are those of the invention process and stages 7'-10' those of a comparative process of the Prior Art, with par-frying.

**Claims**

1. A process for obtaining a frozen potato product that comprises the stages of:

(a) immersing peeled, cut and washed fresh potatoes in a saline solution with a food additive as preserving antioxidant agent, with constant stirring at a temperature $T_1$ of between 55 and 70°C for a period of time/ $t_1$ of between 5 and 15 minutes, preferably 10 minutes, with a salt concentration of between 0.1 and 2% (W/V) and with an additive concentration of between 0.5 and 1.5% (W/V);
(b) immersing the potatoes from stage (a) in an aqueous solution with a color-homogenizing, basifying and structure-stabilizing food additive for a time $t_2$ of between 20 and 40 minutes at a temperature $T_2$ of between 55 and 70°C, with an additive concentration of between 0.5% and 2% (W/V);
(c) cooling the potatoes from stage (b) by of immersion in an aqueous solution with a temperature $T_3$ of between 5 and 20°C and for a time $t_3$ of between 2 and 10 minutes, it being possible optionally to add food additives for enhancing the color or the flavor;
(d) drying the potatoes from stage (c) by means of an airflow at a temperature $T_4$ of between 3 and 25°C for a time $t_4$ of between 2 and 10 minutes with an air speed of between 0.5 and 4 m/s and a relative humidity of between 15 and 40%;
(e) freezing the potato from stage (d) by means of any of the systems for freezing vegetable products that exist in the art.

2. The process as claimed in claim 1, **characterized in that** in stage (a) the potatoes are immersed in a solution of 0.5% (W/V) NaCl and citric acid monohydrate as preservative antioxidant food additive at 1ª (W/V) at 65°C for 10 minutes.

3. The process as claimed in either of claims 1 or 2, **characterized in that** in stage (b) the potatoes are immersed in a solution containing, as color-homogenizing, basifying and structure-stabilizing food additive, tetrasodium pyrophosphate at 1% (W/V) for 30 minutes at 65°C.

4. The process as claimed in any of claims 1 to 3, **characterized in that** the potatoes from stage (b) are immersed in an aqueous solution that may optionally contain a color-enhancing product, such as 0.15% dextrose, or a flavor-enhancing product, such as 0.2% sodium chloride, for 5 minutes at a temperature of 15°C.

5. The process as claimed in any of claims 1 to 4, **characterized in that** the potatoes from stage (c) are dried at 15°C for 4 minutes with an air speed of 2 m/s.

6. The process as claimed in any of claims 1 to 5, **characterized in that** the potatoes from stage (d) are frozen at -18°C by means of any of the industrial freezing methods normally used.

7. A frozen potato product that can be obtained by the process of claims 1 to 6, which may be stored for extended periods of more than 12 months without blackening and which has a homogeneous and compact texture and a composition, measured as dry material yield, similar to that of fresh natural potato and in the range between 18 and 24%.

**Patentansprüche**

1. Ein Verfahren zur Herstellung eines gefrorenen Kartoffelproduktes, welches folgende Schritte umfasst:

(a) Eintauchen von geschälten, geschnittenen und gewaschenen, frischen Kartoffeln in eine Salzlösung mit einem Nahrungsmittelzusatzstoff als konservierendes Antioxidationsmittel unter konstantem Rühren bei einer Temperatur $T_1$ von zwischen 55 und 70° C, für eine Zeit $t_1$ von zwischen 5 und 15 Minuten, vorzugsweise 10 Minuten, mit einer Salzkonzentration von zwischen 0,1 und 2% (W/V), und mit einer Zusatzstoffkonzentration von zwischen 0,5 und 1,5 % (W/V);
(b) Eintauchen der Kartoffeln von Stufe (a) in eine wässerige Lösung mit einem Farb-homogenisierenden, alkalisierenden und Strukturstabilisierenden Nahrungsmittelszusatzstoff für eine Zeit $t_2$ von zwischen 20 und 40 Minuten, bei einer Temperatur $T_2$ von zwischen 55 und 70° C, mit einer Zusatzstoffkonzentration von zwischen 0,5 und von 2% (W/V);
(c) Kühlen der Kartoffeln von Stufe (b) durch Eintauchen in eine wässerige Lösung mit einer Temperatur $T_3$ von zwischen 5 und 20° C, und für eine Zeit $t_3$ von zwischen 2 und 10 Minuten, wobei es gegebenenfalls möglich ist, Nahrungsmittelszusatzstoffe zur Verstärkung der Farbe oder des Geschmacks hinzuzufügen;
(d) Trocknen der Kartoffeln von Stufe (c) mit Hilfe eines Luftstromes bei einer Temperatur $T_4$ von zwischen 3 und 25° C für eine Zeit $t_4$ von zwischen 2 und 10 Minuten, mit einer Luftgeschwindigkeit von zwischen 0,5 und 4 m/s und einer relativen Feuchtigkeit von zwischen 15 und 40%;
(e) Einfrieren der Kartoffel von Stufe (d) mit Hilfe eines der Systeme für einzufrierende Gemüseprodukte, die im Stand der Technik existieren.

2. Das Verfahren wie beansprucht in Anspruch 1, **dadurch gekennzeichnet, dass** die Kartoffeln in Stufe (a) bei 65° C für 10 Minuten in eine Lösung von 0,5% (W/V) NaCl und 1 % (W/V) Zitronensäuremonohydrat als konservierender Antioxidations-Nahrungsmittelszusatzstoff eingetaucht werden.

3. Das Verfahren wie beansprucht in einem der Ansprüche 1 oder 2, **dadurch gekennzeichnet, dass** die Kartoffeln in Stufe (b) für 30 Minuten bei 65° C in eine Lösung eingetaucht werden, die als Farb-homogenisierenden, alkalisierenden und Strukturstabilisierenden Nahrungsmittelzusatzstoff 1 % (W/V) Tetranatrium-pyrophosphat enthält.

4. Das Verfahren wie beansprucht in einem der Ansprüche 1 bis 3, **dadurch gekennzeichnet, dass** die Kartoffeln von der Stufe (b) für 5 Minuten bei einer Temperatur von 15° C in eine wässrige Lösung eingetaucht werden, die gegebenenfalls ein Farb-verstärkendes Produkt wie 0,15% Dextrose, oder ein Geschmacksverstärkendes Produkt wie 0,2% Kochsalz enthalten kann.

5. Das Verfahren wie beansprucht in einem der Ansprüche 1 bis 4, **dadurch gekenntzeichnet, dass** die Kartoffeln von der Stufe (c) bei 15° C für 4 Minuten bei einer Luftgeschwindigkeit von 2 m/s getrocknet werden.

6. Das Verfahren wie beansprucht in einem der Ansprüche 1 bis 5, **dadurch gekennzeichnet, dass** die Kartoffeln von der Stufe (d) bei -18° C mit Hilfe einer der üblicherweise verwendeten industriellen Einfrierungsmethoden eingefroren werden.

**7.** Ein tiefgefrorenes Kartoffelprodukt, welches durch ein Verfahren der Ansprüche 1 bis 6 erhalten werden kann, das über ausgedehnte Zeiträume von mehr als 12 Monate ohne Schwarzfärbung gelagert werden kann, und welches eine homogene und kompakte Struktur und eine Zusammensetzung aufweist, die gemessen als Trockenmaterialausbeute, vergleichbar mit der von frischen natürlichen Kartoffeln ist, und in einem Bereich zwischen 18 und 24 % liegt.

**Revendications**

**1.** Procédé de préparation d'un produit congelé à base de pomme de terre, comportant les étapes suivantes :

a) plonger des pommes de terre pelées, coupées et lavées dans une solution salée contenant un adjuvant alimentaire, comme un agent conservateur anti-oxydant, et les y laisser, tout en agitant constamment le tout à une température $T_1$ de 55 à 70 °C, pendant un laps de temps $t_1$ de 5 à 15 minutes, de préférence de 10 minutes, la concentration de sel valant de 0,1 à 2 % p/v et la concentration d'adjuvant valant de 0,5 à 1,5 % p/v ;
b) plonger les pommes de terre issues de l'étape (a) dans une solution aqueuse contenant un adjuvant alimentaire alcalinisant, homogénéisant la couleur et stabilisant la structure, et les y laisser pendant un laps de temps $t_2$ de 20 à 40 minutes, à une température $T_2$ de 55 à 70 °C, la concentration d'adjuvant valant de 0,5 à 2 % p/v ;
c) refroidir les pommes de terre issues de l'étape (b) en les laissant immergées dans une solution aqueuse à une température $T_3$ de 5 à 20 °C, pendant un laps de temps $t_3$ de 2 à 10 minutes, sachant qu'il est possible, en option, d'ajouter des adjuvants alimentaires destinés à en améliorer la couleur ou le goût ;
d) faire sécher les pommes de terre issues de l'étape (c) en les exposant, pendant un laps de temps $t_4$ de 2 à 10 minutes, à un courant d'air à une température $T_4$ de 3 à 25 °C, cet air se déplaçant à une vitesse de 0,5 à 4 m/s et présentant un taux d'humidité relative de 15 à 40 % ;
e) et congeler les pommes de terre issues de l'étape (d), à l'aide de n'importe lequel des systèmes existants de congélation de produits maraîchers.

**2.** Procédé conforme à la revendication 1, **caractérisé en ce que,** dans l'étape (a), on laisse pendant 10 minutes les pommes de terre immergées dans une solution à 0,5 % p/v de chlorure de sodium et à 1 % p/v d'acide citrique monohydraté, employé au titre d'adjuvant alimentaire conservateur anti-oxydant, à 65 °C.

**3.** Procédé conforme à la revendication 1 ou 2, **caractérisé en ce que,** dans l'étape (b), on laisse pendant 30 minutes les pommes de terre immergées dans une solution à 1 % p/v de pyrophosphate tétrasodique, employé au titre d'adjuvant alimentaire alcalinisant, homogénéisant la couleur et stabilisant la structure, à 65 °C.

**4.** Procédé conforme à l'une des revendications 1 à 3, **caractérisé en ce qu'**on laisse les pommes de terre issues de l'étape (b) immergées pendant 5 minutes dans une solution aqueuse qui peut, en option, contenir un agent améliorant la couleur, comme 0,15 % de dextrose, ou un agent améliorant le goût, comme 0,2 % de chlorure de sodium, à une température de 15 °C.

**5.** Procédé conforme à l'une des revendications 1 à 4, **caractérisé en ce qu'**on fait sécher les pommes de terre issues de l'étape (c) en les exposant pendant 4 minutes à un courant d'air à 15 °C, doté d'une vitesse de 2 m/s.

**6.** Procédé conforme à l'une des revendications 1 à 5, **caractérisé en ce qu'**on congèle à -18 °C les pommes de terre issues de l'étape (d), en opérant selon n'importe lequel des procédés industriels de congélation habituellement mis en oeuvre.

**7.** Produit congelé à base de pommes de terre, que l'on peut obtenir par un procédé conforme à l'une des revendications 1 à 6, qui peut se conserver sans noircir pendant un long laps de temps de plus de 12 mois, qui est doté d'une texture homogène et compacte et qui présente, pour sa composition, une teneur en matière sèche qui est similaire à celle de pommes de terre naturelles frraîches et vaut de 18 à 24 %.

**FIGURE 1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 513114
- US 5393552 A

- US 5206048 A

**Non-patent literature cited in the description**

- **ROUSELLE, P.** *La Pomme de Terre,* 1996

- **VAN EIJCK, P.C.** process for inhibiting enzyme development. *New variety, blanching procedures and (non) enzymatic discolorations,* 1991